# EUROPEAN PATENT APPLICATION

(11) **EP 0 644 453 A1**
(43) Date of publication of application: **22.03.1995**
(21) Application number: 94114296.0
(22) Date of filing: 12.09.1994
(51) Int. Cl.: G02F 1/35

(54) **Organic nonlinear optical materials**

(30) Priority: 16.09.1993 JP 230223/93
(71) Applicant: HOECHST AKTIENGESELLSCHAFT, D-65929 Frankfurt am Main (DE)
(72) Inventor: Kang, Wen-Bing, Kawagoe-shi, Saitama (JP); Sugiyama, Tsunetoshi, Higashimatsuyama-shi, Saitama (JP); Tokida, Akihiko, Kawagoe-shi, Saitama (JP); Funato, Satoru, Kawagoe-shi, Saitama (JP); Yamamoto, Hironobu, Yokohama-shi, Kanagawa (JP)

(57) **Abstract**

Organic nonlinear optical materials that have light absorption in the crystal at wavelengths shorter than 390 nm, that have good crystallinity and processability, that have a non-centrosymmetry molecular arrangement and that hence are suitable for use in wavelength conversion devices comprises compounds having the formula I: 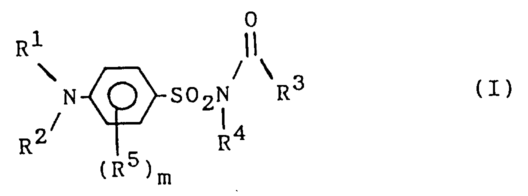
where
R¹, R² and R³ which may be the same or different represent a hydrogen atom, an alkyl group, an aryl group or a heterocyclic group;
R⁴ is a hydrogen atom, an alkyl group, an aryl group, a heterocyclic group or an electron withdrawing group;
R⁵ which may be the same or different represent a hydrogen atom, an alkyl group, an aryl group, a heterocyclic group or an electron donating group;
m is an integer of 1 to 4;
when m is 2 or more, two or more R⁵s may bind together to form a ring;
provided that R³ is not a methyl group when R¹, R², R⁴ and R⁵ are all hydrogen atoms.

## Description

### BACKGROUND OF THE INVENTION

This invention relates to organic nonlinear optical materials useful as nonlinear optical materials.

Nonlinear optical materials are today drawing increasing attention in the field of opto-electronics. Nonlinear optical materials are those materials which interact with light to exhibit a nonlinear optical response. Second-order nonlinear optical effects are exemplified by second harmonic generation (SHG) and the first-order electro-optical (EO) effect (Pockel's effect). The materials exhibiting these effects can be utilized in various devices such as frequency doubling of the laser light, electro-optical modulation and electro-optical switching. Continuative efforts, therefore, are being made to study nonlinear optical devices exhibiting these effects.

Nonlinear optical materials conventionally known to exhibit the SHG effects are inorganic substances such as lithium niobate (LiNbO₃) and potassium titanate phosphate (KTP). The studies heretofore made on wavelength conversion devices utilizing the SHG effect have also focused on these inorganic substances. In recent years, however, organic nonlinear optical materials having a conjugated π-electron system have drawn the increasing attention because of their large optical nonlinearity and fast optical response, and many studies are being conducted in a search for promising materials.

Conventionally known organic nonlinear optical materials include urea, 2-methyl-4-nitroaniline (MNA), m-nitroaniline, N,N-dimethyl-2-acetylamino-4-nitroaniline (DAN), 3-methyl-4-nitropyridine-N-oxide (POM) and N-(4-nitrophenyl)-(L)-prolinol (NPP). Details about organic nonlinear optical materials may be found in, for example,
(1) "Nonlinear Optical Properties of Organic and Polymeric Materials", ed. David J. Williams, ACS Symposium Series No. 233 (1983);
(2) "Nonlinear Optical Properties of Organic Molecules and Crystals", Vols. 1 and 2, ed. D.S. Chemla and J. Zyss, Academic Press (1987);
(3) "Yuki Hisenkei Kogaku Zairyo (Organic Nonlinear Optical Materials)", Masao Kato and Hachiro Nakanishi, CMC Press (1985); and
(4) "Shin-Yuki Hisenkei Kogaku Zairyo (Advanced Nonlinear Optical Organic Materials)" Vols. I and II, T. Kobayashi, M. Umegaki, H. Nakanishi and N. Nakamura, CMC Press (1991).

An issue with the organic compound synthesized by this molecular designing technique is the increment of its dipole moment due to the intramolecular charge transfer interaction. Hence, owing to the dipole-dipole interaction, this organic compound tends to develop a centrosymmetric structure in the molecular cohesive process or crystallization, in which the dipole moments of adjacent molecules cancel out each other. In this case, none of second-order nonlinear optical effects such as SHG will be observed. It is technically impossible, to date, to predict the crystal structure of a certain compound from its chemical structure. Therefore, in order to produce crystals having no centrosymmetry structure, empirical techniques are currently being employed, as exemplified by introducing an optically active group (chirality) or hydrogen bond into the conjugated π-electron system or reducing the dipole moment of the molecule in the ground state so as to reduce the dipole-dipole interaction.

It should also be mentioned that compounds that experience a substantial charge transfer between a donor and an acceptor will shift the absorption maximum to longer wavelength, which results in the extension of the absorption wavelength region to the visible range. Take, for example, the case of a wavelength conversion device combined with a semiconductor laser operating at 780-840 nm; the device will experience materials deterioration or its conversion efficiency will decrease if the compound of which the device is made absorbs light of the SHG wavelength of from 390 to 420 nm. Therefore, it is preferred for the crystals of nonlinear optical materials to have an absorption in the shorter wavelength range and, thus, it means that a cut-off wavelength (λ_{cut off}) of 390 nm or shorter in the nonlinear optical materials is suitable for the application.

The inorganic nonlinear optical materials currently in practical applications as exemplified by lithium niobate and KTP have the disadvantage that they are very expensive while their second-order nonlinearity is not as high as that of organic materials. On the other hand, organic nonlinear optical materials have the advantage that they are less costly and can be synthesized fairly easily. However, the absorption wavelength range of such organic nonlinear optical materials, if they have a high SHG efficiency, extends to the visible region and their crystals show a yellow or orange color, which makes them useless in wavelength conversion of semiconductor lasers. Further, the organic nonlinear optical materials have the disadvantage of poor processability in that it is difficult to produce large single crystals or fabricate waveguide-type wavelength conversion devices such as fiber waveguide-type, and slab and channel waveguide-type wavelength conversion devices.

When fabricating a waveguide-type wavelength conversion device that employs an organic molecular crystal, the molecular arrangement in the nonlinear optical crystal which forms the waveguide is important. In order to enhance the operating efficiency of the wavelength conversion device, the molecules must be aligned in such a direction that the nonlinear optical performance of the crystal can be effectively brought out. Therefore, in order to fabricate a high-performance wavelength conversion device, the molecular arrangement in the single crystal must be taken into account as a design factor.

While practically feasible organic nonlinear optical materials should possess various characteristics, the following are particularly important:
1) large optical nonlinearity;
2) high transparency in the operating wavelength range, in particular, which is longer than 390 nm;
3) high single crystallinity, leading to the production of single crystals of high quality;
4) high mechanical strength to assure ease in crystal processing or in the fabrication of waveguides;
5) thermal and chemical stability;
6) controlled crystal growth in such a manner that molecules are aligned in such a direction that the nonlinear optical performance of the crystal can be effectively brought out when fabricating a bulk-type or waveguide-type wavelength conversion device.

None of the organic nonlinear optical materials known to date have been found to be promising since they do not satisfy all of these performance requirements.

### SUMMARY OF THE INVENTION

Under the circumstances, it is the principal object of the present invention to provide an organic molecular crystal which has light absorption at wavelengths shorter than 390 nm, which has good crystallinity and processability, which has a non-centrosymmetric molecular arrangement and which hence is suitable for use in wavelength conversion devices.

This object of the invention can be attained by an organic nonlinear optical material comprising a compound having the formula I: 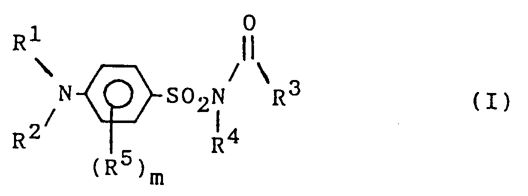
where
R¹, R² and R³ which may be the same or different represent a hydrogen atom, an alkyl group, an aryl group or a heterocyclic group;
R⁴ is a hydrogen atom, an alkyl group, an aryl group, a heterocyclic group or an electron withdrawing group;
R⁵ which may be the same or different represent a hydrogen atom, an alkyl group, an aryl group, a heterocyclic group or an electron donating group;
m is an integer of 1 to 4;
when m is 2 or more, two or more R⁵s may bind together to form a ring;
provided that R³ is not a methyl group when R¹, R², R⁴ and R⁵ are all hydrogen atoms.

### DESCRIPTION OF THE PREFERRED EMBODIMENTS

The alkyl group represented by R¹ - R⁵ in the general formula I is preferably a straight-chained or branched alkyl group having 1 - 10 carbon atoms, with straight-chained or branched alkyl groups having 1 - 4 carbon atoms as exemplified by methyl, ethyl, propyl, isopropyl and butyl being particularly preferred. A most preferred alkyl group is methyl. The alkyl groups as represented by R¹ - R⁵ may be substituted by aryl groups such as phenyl and naphthyl.

The aryl group represented by R¹ - R⁵ in the general formula I has preferably 6 - 20 carbon atoms. Particularly preferred aryl groups include phenyl, tolyl and naphthyl. These aryl groups may have substituents on the ring and preferred substituents include nitro, cyano, formyl, alkylcarbonyl, arylcarbonyl, sulfonyl, alkylsulfonyl, arylsulfonyl, alkoxycarbonyl, aryloxycarbonyl, carbamoyl, alkylaminocarbonyl, arylaminocarbonyl, sulfamoyl, alkylaminosulfonyl, arylaminosulfonyl, etc.

The heterocyclic group represented by R¹ - R⁵ in the general formula I may be exemplified by rings such as pyrrole, furan, thiophene, imidazole, oxazole, thiazole, pyrazole, 3-pyrroline, pyrrolidine, pyridine, piperidine, pyrimidine, purine, quinoline, isoquinoline, carbazole, indole, azaphenanthrene, etc.

R³ in the general formula I may also represent alkoxy, aryloxy, alkylamino, arylamino, etc.

The electron withdrawing group represented by R⁴ in the general formula I may be exemplified by formyl, alkylcarbonyl, arylcarbonyl, alkylsulfonyl, arylsulfonyl, alkoxycarbonyl, aryloxycarbonyl, carbamoyl, alkylaminocarbonyl, arylaminocarbonyl, sulfamoyl, alkylaminosulfonyl, arylaminosulfonyl, etc.

The electron donating group represented by R⁵ in the general formula I may be exemplified by halogen, amino, alkylamino, dialkylamino, arylamino, diarylamino, alkylarylamino, hydroxyl, alkoxy, aryloxy, alkylcarbonyloxy, arylcarbonyloxy, alkylcarbonylamino, arylcarbonylamino, etc.

The compounds of which the organic nonlinear optical materials of the invention are made may have part or all of the hydrogen atoms in the amino group, aromatic ring and various substituents replaced by deuterium.

The following are specific but by no means limiting examples of the compounds that are preferably used in the invention. 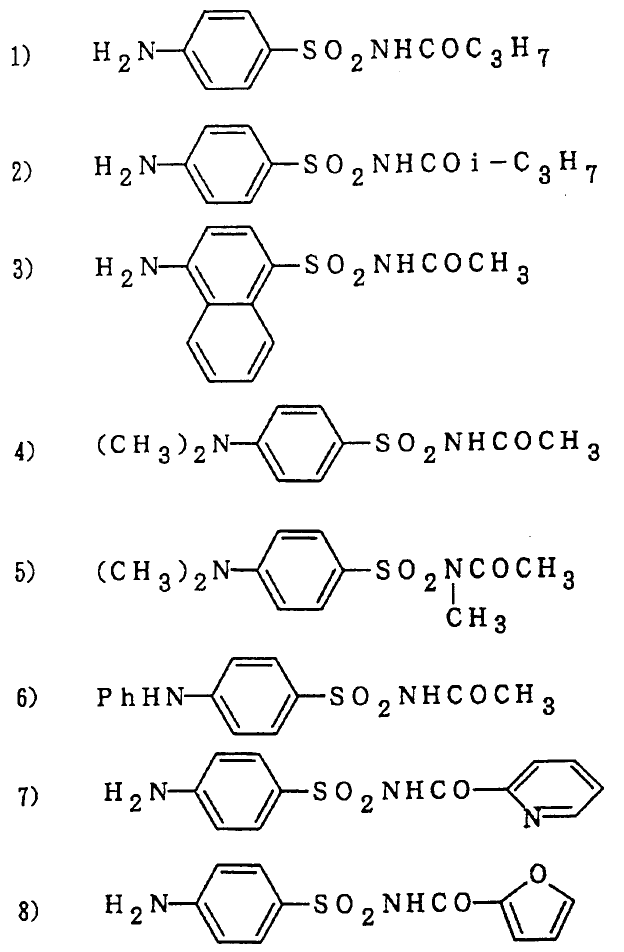 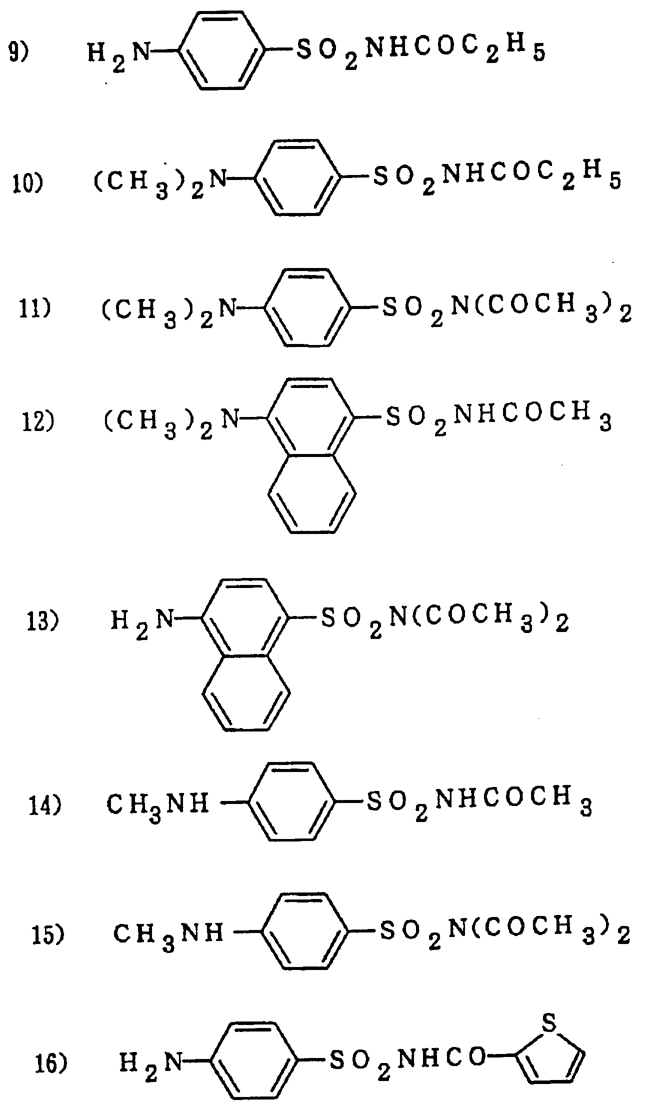
The compounds of the general formula I for use in the invention may be synthesized by any known methods, such as adding sulfanilamide or derivatives thereof to fuming sulfuric acid and then adding carboxylic acid to the mixture. For more details of this method, see N. A. Kravchenya, Khim.-Farm. Zh., 23(4), 454 - 6 (1989). The compounds synthesized by this and other known methods are available as crystal or oil and, hence, can be worked up to higher purity by liquid chromatography or recrystallization from suitable solvents if this is necessary. Acetonitrile may be used as a recrystallizing solvent.

In the invention, compounds of the general formula I may be used either independently or in admixtures. If desired, those compounds or mixtures thereof may be dispersed or dissolved in polymers to prepare compositions. Polymers useful for this purpose include polyesters, polycarbonates, polyvinyl chloride, polyethers, polyacrylates, polymethacrylates, polystyrenes, polyolefins, polyvinyl carbazole, as well as mixtures and copolymers thereof.

The compounds of the general formula I are useful in the making of second-order nonlinear optical processing devices such as bulk-type wavelength conversion devices, planar waveguide-type wavelength conversion devices and fiber-type wavelength conversion devices, as well as optical waveguide devices and optical frequency multiplying devices.

The following examples are given for the purpose of further illustrating the compounds of the general formula I but are by no means intended to limit the scope of the present invention.

### Example 1

Sulfanilamide (17.2 g) was slowly added to 20% fuming sulfuric acid (25 ml) with the reaction temperature controlled at room temperature. Subsequently, butyric acid (10 g) was added dropwise and reaction was performed at 30 - 40°C for 30 min. After the reaction solution was cooled, the reaction mixture was poured into ice water and neutralized and then filtered to yield a solid product. Recrystallization from acetonitrile gave N-(4-aminobenzenesulfonyl)-butylamide in an amount of 18 g. The structure of this compound was verified by NMR measurement. The compound had a melting point of 96 - 97°C.

To demonstrate the SHG intensity of this compound, second harmonic waves were measured by the following powder method, details of which are described in S.K. Kurtz and T.T. Perry, J. Appl. Phys., 39, 3978 (1966).

The compound as produced by recrystallization from acetonitrile was pulverized with a grinder and passed through a sieve. Particles having sizes of 63 - 100 µm were shifted and packed between two glass slides with a spacer 1 mm thick interposed.

A Nd:YAG laser operating at a wavelength of 1064 nm was used as a light source in the measurement of second harmonics. The laser light was applied to the powder sample. After cutting off the fundamental wave with a filter, the second harmonics generated were passed through an interference filter and detected with a photomultiplifer tube.

The same procedure was repeated to detect second harmonics from the powder sample using as a light source a dye laser operating at a wavelength of 830 nm as excited by the second harmonics from the Nd:YAG laser.

The results are shown in Table 1 in terms of relative intensities, with the SHG intensity of urea as a standard sample being taken as unity.

### Examples 2 - 4

The procedure of Example 1 was repeated to prepare N-(4-aminobenzenesulfonyl)-isobutylamide (Example 2), N-(4-aminonaphthalenesulfonyl)-acetamide (Example 3) and N-(4-dimethylaminobenzenesulfonyl)-acetamide (Example 4).

The SHG intensities of these compounds were measured by the same method as in Example 1. The results are shown in Table 1.

### Comparative Example 1

Same measurements were conducted with a control compound p-nitroaniline. The results are shown in Table 1.

**Table 1**

| Example No. | SHG intensity | | Visible absorption |
|---|---|---|---|
| | 1064 nm | 830 nm | |
| Urea (standard) | 1 | 1 | None |
| 1 | 0.5 | 1 | do. |
| 2 | 1 | 2 | do. |
| 3 | 2 | 5 | do. |
| 4 | 1 | 3 | do. |
| Control (p-nitroaniline) | 0 | 0 | 500 nm (absorption edge) |

As is clear from the above data, the compounds of the invention are nonlinear optical materials capable of efficient blue emission.

Thus, the present invention provides organic nonlinear optical materials that are substantially free from absorption in the visible region, that will not easily exhibit cenrosymmetry under use conditions and which yet produce high SHG intensity.

## Claims

1. An optical material comprising a compound having the formula I: 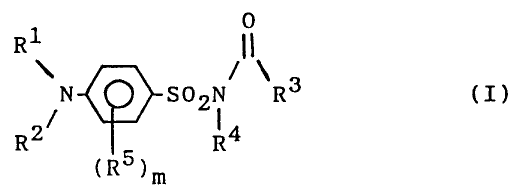 where
R¹, R² and R³ which may be the same or different represent a hydrogen atom, an alkyl group, an aryl group or a heterocyclic group;
R⁴ is a hydrogen atom, an alkyl group, an aryl group, a heterocyclic group or an electron withdrawing group;
R⁵ which may be the same or different represent a hydrogen atom, an alkyl group, an aryl group, a heterocyclic group or an electron donating group;
m is an integer of 1 to 4;
when m is 2 or more, two or more R⁵s may bind together to form a ring;
provided that R³ is not a methyl group when R¹, R², R⁴ and R⁵ are all hydrogen atoms.
